# EUROPÄISCHE PATENTANMELDUNG

(11) **EP 3 907 927 A1**
(43) Veröffentlichungstag der Anmeldung: **10.11.2021**
(21) Anmeldenummer: 20173336.7
(22) Anmeldetag: 06.05.2020
(51) Int. Cl.: H04L 9/08

(54) **BEREITSTELLUNG QUANTENSICHERER SCHLÜSSEL FÜR UNTEREINANDER NICHT DURCH QUANTENKANAL VERBUNDENE NETZWERKKNOTEN**

(71) Anmelder: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Brandt & Nern Patentanwälte

(57) **Zusammenfassung**

Die Erfindung betrifft eine Lösung zur Bereitstellung quantensicherer Schlüssel als Nutzschlüssel für erste Netzwerkknoten (1₁, 1₂) mit Mitteln zur Erzeugung und zum Schlüsselaustausch nach einem QKD-Verfahren, die aber direkt untereinander nicht über einen Quantenkanal verbunden sind. Ein erster, in einem der Netzwerkknoten (1₁, 1₂) erzeugter quantensicherer Nutzschlüssel wird an den anderen ersten Netzwerkknoten (1₁, 1₂) über einen Übertragungspfad, mit mindestens einem zweiten, zur Nutzung des QKD-Prinzips ausgebildeten intermediären Netzwerkknoten (2₁, 2₂, ..., 2ₙ) übertragen, der mit einem auf dem Übertragungspfad vorhergehenden sowie mit einem ihm nachfolgenden Netzwerkknoten über je einen Quantenkanal verbunden ist. Die Übertragung erfolgt mittels einer Bitfolge, die in dem jeweiligen Netzwerknoten (2₁, 2₂, ..., 2ₙ) innerhalb eines manipulationssicheren Gehäuses (3) jeweils gebildet wird, indem eine von dem in der Übertragungsrichtung vorhergehenden Netzwerknoten empfangene Bitfolge, welche durch eine bitweise XOR-Verknüpfung des Nutzschlüssels mit einem mit dem vorhergehenden Netzwerkknoten gemeinsamen quantensicheren Schlüssel gebildet ist, abermals mit dem mit dem vorhergehenden Netzwerkknoten gemeinsamen quantensicheren Schlüssel sowie außerdem mit einem nachfolgenden Netzwerkknoten gemeinsamen quantensicheren Schlüssel bitweise XOR verknüpft wird.

## Beschreibung

Die Erfindung betrifft eine Lösung, welche es ermöglicht, zwei Netzwerkknoten, welche zwar über eine QKD-Infrastruktur, nämlich über Mittel zur quantenmechanischen Erzeugung von kryptographischen Schlüsseln und zu deren Verwaltung sowie über Mittel zum Aufbau eines Quantenkanals verfügen, aber untereinander direkt nicht über einen Quantenkanal verbunden oder verbindbar sind, quantensichere Schlüssel für einen direkten, verschlüsselten Datenaustausch zur Verfügung zu stellen. Die Bereitstellung entsprechender quantensicherer kryptographischer Schlüssel erfolgt dabei mit Hilfe anderer, als intermediäre Netzwerkknoten fungierende Knoten, in welchen jedoch die den beiden eingangs genannten Netzwerkknoten bereitzustellenden Schlüssel außerhalb eines speziell gesicherten Bereiches selbst nicht zur Verfügung stehen. Das heißt, die den beiden eingangs genannten Netzwerkknoten für einen direkten verschlüsselten Datenaustausch zur Verfügung gestellten quantensicheren Schlüssel sind im Grunde nur diesen beiden Netzwerkknoten selbst bekannt. Gegenstände der Erfindung sind ein entsprechendes Verfahren und ein zur Durchführung dieses Verfahrens in spezieller Weise ausgebildeter intermediärer Netzwerkknoten.

Die vorgestellte Lösung geht von der Annahme beziehungsweise von dem anerkannten Grundsatz aus, dass ein Kommunikationssystem als quantensicher gilt, sofern sich die Vertraulichkeit und die Authentizität zwischen einem Sender und einem Empfänger übertragener Daten nicht durch Quantencomputer angreifen lässt. Entsprechendes wird nach dem derzeitigen Stand der Technik durch den Aufbau eines QKD-Systems erreicht, bei welchem die sendende und die empfangende Stelle über Mittel zur quantenmechanischen Erzeugung und zum Austausch von ihnen gemeinsam genutzter kryptographischer Schlüssel verfügen, wobei sie dazu typischerweise über einen Quantenkanal und über einen klassischen Kanal miteinander verbunden sind.

Im Rahmen der derzeit zur Verfügung stehenden Technik zur Nutzung der QKD-Technologie ist jedoch die Reichweite für einen nach dem QKD-Prinzip, das heißt nach einem Verfahren der Quantum Key Distribution, erfolgenden Quantenschlüssel-Austausch limitiert und auf Richtfunkverbindungen (terrestrisch oder über Satellit) beziehungsweise auf direkte Verbindungen über Glasfaserstrecken ohne optische Inlineverstärker beschränkt. In Bezug auf Letztere, also auf Glasfaserverbindungen, ergibt sich die Beschränkung der Reichweite durch die Dämpfung, welcher die zum Zweck des Schlüsselaustauschs mit geringer Leistung übertragenen Photonen in der Lichtleitfaser (des Quantenkanals) unterliegen. Hierdurch ist ein Schlüsselaustausch nach dem QKD-Prinzip unter Nutzung von Glasfaserverbindungen typischerweise nur über wenige Kilometer, aber jedenfalls nach dem Stand der Technik nicht über Entfernungen möglich, die deutlich größer sind als 100 km, also insbesondere mehrere 100 km oder gar über 1.000 km betragen.

Sofern daher Netzwerkknoten, deren Entfernung voneinander eine unmittelbare Anwendung des QKD-Prinzips nicht ermöglicht, mit quantensicheren, für einen direkten verschlüsselten Datenaustausch zwischen diesen Knoten zu verwendenden Schlüsseln ausgestattet werden sollen, werden diesen Netzwerkknoten entsprechende Schlüssel über einen oder mehrere zwischen ihnen angeordnete intermediäre Netzwerkknoten zugestellt. Ein Nachteil dazu bisher bekannt gewordener Lösungen ist es jedoch, dass der oder die für den direkten verschlüsselten Datenaustausch zwischen den beiden nicht über einen Quantenkanal miteinander verbundenen Netzwerkknoten vorgesehenen Schlüssel auch in dem oder den zu ihrer Übertragung genutzten intermediären Netzwerkknoten vorliegen.

Dies macht es erforderlich, die betreffenden intermediären Netzwerkknoten als sogenannte Trusted Nodes beziehungsweise in einer speziellen Trusted Zone, also einer hochgesicherten Umgebung, zu betreiben. Solche speziell gesicherten Trusted Nodes oder Sicherheitsumgebungen müssen in besonderer Weise gegen einen illegalen Zutritt gesichert und überwacht werden, um zuverlässig zu verhindern, dass über sie übertragene quantensichere Schlüssel in die Hände potenzieller Angreifer gelangen. Die entsprechenden Einrichtungen sind daher typischerweise mit aufwendigen Überwachungssystemen, Schließmechanismen, Alarmanlagen, und dergleichen mehr ausgestattet und werden häufig zudem durch einen Sicherheitsdienst oder durch mit der Polizei gekoppelte Einbruchsmeldeanlagen geschützt. Jedoch sind entsprechende Sicherungs- und Überwachungsmaßnahmen mit einem beträchtlichen Aufwand und insoweit mit sehr hohen Kosten verbunden.

Aufgabe der Erfindung ist es, eine Lösung anzugeben, welche die Bereitstellung quantensicherer kryptographischer Schlüssel zum Zweck eines sicheren direkten Datenaustauschs für Netzwerkknoten ermöglicht, die nicht durch einen Quantenkanal für einen Schlüsselaustausch nach dem QKD-Prinzip verbunden sind. Hierzu sind ein Verfahren zu beschreiben und ein zur Durchführung des Verfahrens geeigneter intermediärer Netzwerkknoten bereitzustellen.

Die Aufgabe wird durch ein Verfahren mit den Merkmalen des Patentanspruchs 1 gelöst. Ein die Aufgabe lösender, zur Durchführung des Verfahrens geeigneter intermediärer Netzwerkknoten wird durch den ersten unabhängigen Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren zur Bereitstellung quantensicherer kryptographischer Schlüssel für einen sicheren direkten Datenaustausch zwischen zwei Netzwerkknoten geht von einer Situation aus, bei welcher die vorgenannten beiden Netzwerkknoten zwar über eine QKD-Infrastruktur verfügen, aber selbst untereinander direkt nicht über einen Quantenkanal verbunden sind. Das heißt, die betreffenden Netzwerkknoten, denen quantensichere Schlüssel als Nutzschlüssel für einen sicheren direkten Datenaustausch zur Verfügung gestellt werden sollen, verfügen insbesondere über Mittel zur Erzeugung und zum Austausch von Quantenschlüsseln nach dem QKD-Prinzip, das heißt nach einem Verfahren der Quantum Key Distribution, wie beispielsweise dem BB84-Verfahren. Die Netzwerkknoten sind aber dennoch, wie bereits ausgeführt, untereinander selbst nicht über einen Quantenkanal verbunden sowie verbindbar. Sie können demnach untereinander nicht Quantenschlüssel unter Nutzung des QKD-Prinzips austauschen, so dass die Bereitstellung von quantenmechanisch erzeugten Schlüsseln, welche die Netzwerkknoten für einen direkten Datenaustausch verwenden können, auf anderem Wege erfolgen muss.

Daher wird zumindest ein erster, in einem der beiden Netzwerkknoten erzeugter quantensicherer Nutzschlüssel an den anderen der beiden Netzwerkknoten über einen Übertragungspfad übertragen, der die beiden mit quantensicheren Schlüsseln zu versorgenden Netzwerkknoten selbst sowie mindestens einen, ebenfalls zur Nutzung des QKD-Prinzips ausgebildeten intermediären Netzwerkknoten umfasst. Eine solche Vorgehensweise ist, wie eingangs geschildert, grundsätzlich als bekannt anzusehen. Gemäß der Erfindung erfolgt jedoch zur Lösung der gestellten Aufgabe die Übertragung zumindest eines ersten Nutzschlüssels über den vorgenannten Übertragungskanal in besonderer Weise, wobei gleichzeitig durch eine spezielle Ausbildung des oder der gegebenenfalls mehreren intermediären Netzwerkknoten sichergestellt wird, dass dieser mindestens eine Nutzschlüssel nicht abgegriffen werden kann, das heißt Unbefugten nicht zugänglich wird. Wie später noch zur erläutern sein wird, muss dabei der mindestens eine in besonderer Weise ausgebildete intermediäre Netzwerkknoten nicht als ein Trusted Node im eingangs, bei der Beschreibung des Standes der Technik, dargestellten Sinne ausgelegt werden.

An dieser Stelle sollen einige vorstehend oder nachfolgend in der Beschreibung sowie in den Patentansprüchen verwendete Begrifflichkeiten hinsichtlich ihres bei der Beschreibung der Erfindung zugrunde gelegten Verständnisses erläutert werden. Die Verwendung des Begriffs Nutzschlüssel im Zusammenhang mit einem den beiden nicht über einen Quantenkanal verbundenen Netzwerkknoten bereitgestellten quantensicheren kryptographischen Schlüssel soll ausschließlich dazu dienen, diesen Schlüssel von anderen zum Zwecke seiner Übertragung gemäß der erfindungsgemäßen Lösung verwendeten quantensicheren Schlüsseln beziehungsweise Quantenschlüsseln zu unterscheiden. Diese Unterscheidung dient ausschließlich der sprachlichen Vereinfachung, das heißt, auch bei dem Nutzschlüssel handelt es sich, ebenso wie bei den anderen zur Durchführung des erfindungsgemäßen Verfahrens verwendeten quantensicheren Schlüsseln, um einen Quantenschlüssel. Wie aus der vorstehenden Aussage zudem deutlich wird, werden die Begriffe quantensicherer Schlüssel und Quantenschlüssel in dieser Beschreibung und in den Patentansprüchen synonym verwendet.

Der Begriff Nutzschlüssel bezieht sich dabei auf die Nutzung des betreffenden quantensicheren Schlüssels für einen sicheren direkten Datenaustausch zwischen den beiden selbst nicht über einen Quantenkanal miteinander verbundenen (ersten) Netzwerkknoten. Hingegen dienen die anderen bei der Beschreibung der Erfindung angesprochenen quantensicheren Schlüssel beziehungsweise Quantenschlüssel ausschließlich dazu, den vorgenannten Nutzschlüssel über den schon angesprochenen, neben den mit dem Nutzschlüssel zu versorgenden Netzwerkknoten mindestens einen intermediären Netzwerkknoten umfassenden Übertragungspfad in erfindungsgemäßer Weise zu übertragen.

In den Patentansprüchen werden die beiden mit quantensicheren Schlüsseln zu versorgenden, zwar mit einer QKD-Infrastruktur ausgestatteten, aber selbst nicht durch einen Quantenkanal miteinander verbundenen Netzwerkknoten aus Gründen der Klarheit und der eindeutigen Unterscheidung von dem oder den intermediären Netzwerkknoten als erste Netzwerkknoten bezeichnet. Dies wird bei den nachfolgenden Erläuterungen, jedenfalls soweit dies zur eindeutigen Unterscheidbarkeit nicht zwingend erforderlich ist, nicht durchgängig getan oder nur gelegentlich durch einen entsprechenden, in Klammern gesetzten Zusatz kenntlich gemacht. Beide mit quantensicheren Schlüsseln (Nutzschlüsseln) zu versorgende, nicht als intermediäre Netzwerkknoten fungierende Netzwerkknoten werden als erste Netzwerkknoten bezeichnet, da sie hinsichtlich ihres Aufbaus und ihrer Eigenschaften im Wesentlichen gleich sind. Insoweit kann sowohl der eine als auch der andere dieser Netzwerkknoten zur Erzeugung des oder der Nutzschlüssel dienen und der jeweils andere zu dessen beziehungsweise deren Empfang bestimmt sein.

Was den sicheren Datenaustausch zwischen den mit Nutzschlüsseln versorgten beiden (ersten) Netzwerkknoten, also die mittels dieses Nutzschlüssels verschlüsselt ausgetauschten Daten anbelangt, sei klargestellt, dass es sich bei diesen Daten um ganz gewöhnliche Anwendungsdaten, aber auch um Daten handeln kann, welche ihrerseits kryptographische Schlüssel repräsentieren. Vor diesem Hintergrund ist auch die Aussage zu verstehen, wonach zumindest ein erster Nutzschlüssel über den die beiden mit quantensicheren Schlüsseln zu versorgenden Netzwerkknoten sowie mindestens einen intermediären Netzwerkknoten umfassenden Übertragungskanal in einer Übertragungsrichtung, nämlich von dem diesen quantensicheren Nutzschlüssel erzeugenden ersten Netzwerkknoten zu dem für seinen Empfang bestimmten anderen ersten Netzwerkknoten, übertragen wird. Dies schließt nämlich die Möglichkeit ein, dass nur ein solcher Nutzschlüssel in erfindungsgemäßer Weise zwischen den beiden (ersten) Netzwercknoten übertragen wird, wohingegen nachfolgend ein oder mehrere ebenfalls quantensichere Schlüssel zwischen den beiden Netzwerkknoten auch über einen klassischen Übertragungskanal übertragen werden können, sofern sie dazu mit dem ersten, in erfindungsgemäßer Weise übertragenen Nutzschlüssel verschlüsselt werden.

Mit Blick auf das Vorgesagte, nämlich darauf, dass beide mit quantensicheren Schlüsseln zu versorgende Netzwerkknoten als erste Netzwerkknoten bezeichnet werden, besteht hierbei sogar die Möglichkeit, dass ein erster, in erfindungsgemäßer Weise über den Übertragungspfad übertragener Nutzschlüssel durch einen der beiden ersten Netzwerkknoten erzeugt wird und die nachfolgend verschlüsselt über den klassischen Kanal übertragenen weiteren quantensicheren Schlüssel durch den anderen oder wechselweise durch einen der ersten Netzwerkknoten erzeugt werden. Die Erzeugung eines jeweiligen quantensicheren Nutzschlüssels erfolgt in dem jeweiligen ersten Netzwerkknoten vorzugsweise durch einen Quantenzufallszahlengenerator, das heißt durch einen Quantum Random Number Generator (QRNG).

Entsprechend dem erfindungsgemäßen Verfahren erfolgt die Übertragung des mindestens einen Nutzschlüssels über den Übertragungskanal mit dem mindestens einen erfindungsgemäß ausgebildeten intermediären Netzwerkknoten mit Hilfe von bestimmten Bitfolgen, das heißt mittels jeweils einer, je intermediärem Netzwerkknoten gebildeten Bitfolge. Es handelt sich hierbei um eine Bitfolge, die in dem jeweiligen intermediären Netzwerknoten jeweils innerhalb eines eine Einheit zur Bildung dieser Bitfolge sowie Mittel zur Schlüsselerzeugung und zum Aufbau der Quantenkanäle zu den benachbarten Netzwerkknoten aufnehmenden manipulationssicheren Gehäuses gebildet wird.

Diese Bitfolge wird gebildet, indem eine von dem in der Übertragungsrichtung vorhergehenden Netzwerknoten empfangene Bitfolge, welche durch eine bitweise XOR-Verknüpfung des Nutzschlüssels mit einem quantensicheren Schlüssel gebildet ist, der aufgrund eines Austausches nach dem QKD-Prinzip, sowohl in dem diese Bitfolge empfangenden intermediären Netzwerkknoten als auch in dem auf dem Übertragungspfad vorhergehenden Netzwerkknoten gemeinsam vorliegt und welche in dem sie empfangenden intermediären Netzwerkknoten (innerhalb des manipulationssicheren Gehäuses) abermals mit dem mit dem vorhergehenden Netzwerkknoten gemeinsamen quantensicheren Schlüssel sowie mit einem, aufgrund Austausches nach dem QKD-Prinzip, mit dem in der Übertragungsrichtung nachfolgenden Netzwerkknoten gemeinsamen quantensicheren Schlüssel bitweise XOR verknüpft wird. Hierbei liegen in dem jeweiligen intermediären Netzwerkknoten außerhalb des manipulationssicheren Gehäuses lediglich die jeweiligen mit dem Nutzschlüssel gebildeten bitweisen XOR-Verknüpfungen vor, nicht aber der übertragene Nutzschlüssel selbst.

An dieser Stelle sei darauf hingewiesen, dass im Zusammenhang mit der Erläuterung der Erfindung in der Beschreibung und in den Patentansprüchen sowohl im Hinblick auf die jeweilige Operation als auch auf die jeweils entstehende Verknüpfung von einer bitweisen XOR-Verknüpfung ausgegangen wird, und zwar auch dann, wenn ausnahmsweise der Zusatz "bitweise" im Einzelfalle fehlt.

Vorzugsweise wird der mindestens eine, in einem der beiden ersten Netzwercknoten erzeugte, erfindungsgemäß mit Hilfe von bitweisen XOR-Verknüpfungen übertragene Nutzschlüssel über den die beiden ersten Netzwerkknoten und mindestens einen intermediären Netzwerkknoten umfassenden Übertragungspfad nach dem folgendem Prinzip übertragen:
a.) Von dem Netzwerkknoten, welcher den Nutzschlüssel erzeugt und diesen mit dem anderen, mit ihm nicht über einen Quantenkanal verbundenen Netzwerkknoten gemeinsam für einen sicheren Datenaustausch verwenden möchte, wird eine Bitfolge ausgesendet, die gebildet wird durch eine bitweise XOR-Verknüpfung des erzeugten Nutzschlüssels mit einem quantensicheren Schlüssel, über den durch Austausch nach dem QKD-Prinzip sowohl der den Nutzschlüssel erzeugende Netzwerkknoten als auch der ihm in der Übertragungsrichtung nachfolgende intermediäre Netzwerkknoten gemeinsam verfügen.
b.) In jedem intermediären Netzwerkknoten (unabhängig davon, ob der Übertragungskanal für den Nutzschlüssel einen oder mehrere intermediäre Netzwerkknoten umfasst), der an einen ihm nachfolgenden Netzwerkknoten eine Bitfolge aussendet, wird die auszusendende Bitfolge gebildet durch eine bitweise XOR-Verknüpfung der durch ihn von dem in der Übertragungsrichtung vorhergehenden Netzwerkknoten empfangenen Bitfolge mit einem, aufgrund Austausches nach dem QKD-Prinzip, mit diesem Netzwerkknoten gemeinsamen quantensicheren Schlüssel sowie durch bitweise XOR-Verknüpfung mit einem quantensicheren Schlüssel, über den durch Austausch nach dem QKD-Prinzip sowohl der die Verknüpfung jeweils vornehmende intermediäre Netzwerkknoten als auch der ihm in der Übertragungsrichtung auf dem Übertragungspfad nachfolgende Netzwerkknoten gemeinsam verfügen.
c.) In dem zum Empfang des Nutzschlüssels vorgesehenen Netzwerkknoten, also in dem Netzwerkknoten, mit welchem der den Nutzschlüssel erzeugende Netzwerkknoten unter Verwendung des Nutzschlüssels sicher Daten austauschen möchte, wird der Nutzschlüssel aus der empfangenen Bitfolge extrahiert durch bitweise XOR-Verknüpfung dieser Bitfolge mit dem zu ihrer Bildung verwendeten quantensicheren Schlüssel, über den durch Austausch nach dem QKD-Prinzip sowohl der für den Empfang des Nutzschlüssels vorgesehene Netzwerkknoten als auch der ihm in der Übertragungsrichtung auf dem Übertragungsweg vorhergehende intermediäre Netzwerkknoten gemeinsam verfügen.

Zuvor wurde das Verfahren in seiner allgemeinsten abstrahierten Form dargestellt. Hierbei wurde außer Betracht gelassen, dass in QKD-Systemen typischerweise fortwährend quantensichere Schlüssel generiert werden und in einem nach dem erfindungsgemäßen Verfahren arbeitenden System in der Praxis sicherlich nicht nur ein einziges Mal ein Nutzschlüssel in erfindungsgemäßer Weise übertragen wird. Damit aber in einem QKD-System mit fortwährend generierten quantensicheren Schlüsseln zwei in einer QKD-Beziehung untereinander stehende Netzwerkknoten bei der Anwendung eines in ihrer beider Besitz befindlichen quantensicheren Schlüssels denselben der mehreren generierten Schlüssel verwenden, wird den generierten quantensicheren Schlüsseln bei ihrer Abspeicherung in einem jeweiligen HSM (Hardwaresicherheitsmodul) der QKD-Knoten ein sie eindeutig identifizierender Identifier zugeordnet. Hierbei kann es sich, ebenso wie bei den quantensicheren Schlüsseln selbst, um eine (wiederum im Besitz beider Netzwerkknoten befindliche) Zufallszahl handeln.

Entsprechend einer möglichen, vor dem Hintergrund der zuletzt gegebenen Erläuterungen praxisrelevanten Verfahrensgestaltung, bei der ein erster, von den beiden ersten Netzwerkknoten gemeinsam zu nutzender, durch einen dieser beiden Netzwerknoten erzeugter quantensicherer Nutzschlüssel an den anderen ersten Netzwerkknoten aufgrund einer über einen klassischen Übertragungskanal erfolgenden Anforderung des anderen ersten Netzwerkknotens in erfindungsgemäßer Weise über den Übertragungskanal übertragen wird, vollzieht sich daher diese Übertragung unter Berücksichtigung des zuvor in der Gliederung a) bis c) dargestellten Prinzips konkret mit den folgenden Verfahrensschritten:
1.) Auswählen eines beliebigen Nutzschlüssels aus einer Mehrzahl von einem ersten Netzwerkknoten erzeugter Nutzschlüssel aufgrund der erfolgten Anforderung eines Nutzschlüssels und bitweises XOR-Verknüpfen dieses Nutzschlüssels durch den ihn auswählenden ersten Netzwerkknoten (welcher diesen Nutzschlüssel zuvor auch erzeugt hatte) mit einem beliebigen quantensicheren Schlüssel, über den durch Austausch nach dem QKD-Prinzip sowohl der erste, den Nutzschlüssel (erzeugende und) auswählende Netzwerkknoten als auch der ihm in der Übertragungsrichtung nachfolgende intermediäre Netzwerkknoten gemeinsam verfügen,
2.) Übertragen der durch die bitweise XOR-Verknüpfung gebildeten Bitfolge, der Identifier der beiden zur Bildung der XOR-Verknüpfung verwendeten quantensicheren Schlüssel und einer eine Information über den für den Empfang des Nutzschlüssels bestimmten Netzwerkknoten enthaltenden Angabe zu dem verbleibenden (für die Übertragung des Nutzschlüssels noch zu durchlaufenden) Teil des Übertragungspfades von dem den Nutzschlüssel erzeugenden ersten Netzwerkknoten an den ihm in der Übertragungsrichtung nachfolgenden intermediären Netzwerkknoten,
3.) Empfangen der von dem in der Übertragungsrichtung vorhergehenden Netzwerkknoten übertragenen Bitfolge, der Identifier sowie der die Information über den für den Empfang des Nutzschlüssels bestimmten Netzwerkknoten enthaltenden Angabe zum verbleibenden Teil des Übertragungspfades durch den intermediären Netzwerkknoten und Bildung einer neuen Bitfolge durch bitweise XOR-Verknüpfung der empfangenen Bitfolge mit einem, aufgrund Austausches nach dem QKD-Prinzip, mit dem vorhergehenden Netzwerkknoten gemeinsamen (das heißt sowohl dem die bitweise XOR-Verknüpfung gerade bildenden als auch dem vorhergehenden Netzwerkknoten bekannten) quantensicheren Schlüssel sowie mit einem beliebigen quantensicheren Schlüssel, über den durch Austausch nach dem QKD-Prinzip der diese Bitfolge bildende Netzwerkknoten als auch der ihm in der Übertragungsrichtung nachfolgende Netzwerkknoten gemeinsam verfügen,
4.) Übertragen der gebildeten neuen Bitfolge, der Identifier des Nutzschlüssels und des zur Bildung der neuen Bitfolge verwendeten quantensicheren Schlüssels sowie einer eine Information über den für den Empfang des Nutzschlüssels bestimmten Netzwerkknoten enthaltenden Angabe zum verbleibenden Teil des Übertragungspfades von dem die neue Bitfolge erzeugenden intermediären Netzwerkknoten an den in der Übertragungsrichtung nachfolgenden Netzwerkknoten,
5.) Empfangen der von dem in der Übertragungsrichtung vorhergehenden intermediären Netzwerkknoten übertragenen Bitfolge, der Identifier sowie der die Information über den für den Empfang des Nutzschlüssels bestimmten Netzwercknoten enthaltenden Angabe zum verbleibenden Teil des Übertragungspfades und, sofern der die Bitfolge empfangende Netzwerkknoten gemäß der Angabe zum verbleibenden Teil des Übertragungspfades der letzte Netzwerkknoten auf dem Übertragungspfad ist, bitweise XOR-Verknüpfung dieser Bitfolge mit dem zu deren Bildung durch den in der Übertragungsrichtung vorhergehenden intermediären Netzwerkknoten verwendeten, durch den ebenfalls empfangenen zugehörigen Identifikator eindeutig bestimmten quantensicheren Schlüssel, über den, aufgrund Austausches nach dem QKD-Prinzip, sowohl der empfangende erste Netzwerkknoten als auch der in der Übertragungsrichtung vorhergehende intermediäre Netzwerkknoten gemeinsam verfügen.

Die Verfahrensschritte 3.) und 4.) des vorstehend im Detail angegebenen Verfahrensablaufs werden dabei so oft wiederholt, bis ein die gemäß Verfahrensschritt 4) übertragene Bittfolge empfangender Netzwerkknoten durch Auswertung der mit dieser Bitfolge zusammen empfangenen Angabe zum verbleibenden Teil des Übertragungspfades feststellt, dass er der letzte Netzwerkknoten des Übertragungspfades, also der zum Empfang des Nutzschlüssels bestimmte erste Netzwerkknoten ist und demgemäß den Verfahrensschritt 5.) ausführt.

Wie bereits ausgeführt, ist das Verfahren erfindungsgemäß in jedem Falle so ausgestaltet, dass in dem oder den intermediären Netzwerkknoten außerhalb eines manipulationssicheren Gehäuses, welches QKD-Server zur Schlüsselerzeugung und zum Aufbau der Quantenkanäle zu den jeweils benachbarten Netzwerkknoten sowie eine Einheit zur Bildung der jeweiligen bitweisen XOR-Verknüpfung aufnimmt, lediglich die jeweilige, durch bitweise XOR-Verknüpfung gebildete Bitfolge, nicht aber der übertragene Nutzschlüssel selbst vorliegt. Zudem werden nach der innerhalb des vorgenannten manipulationssicheren Gehäuses erfolgenden Bildung einer bitweisen XOR-Verknüpfung alle dabei verwendeten quantensicheren Schlüssel jeweils unmittelbar gelöscht.

Ein die Aufgabe lösender, zur Durchführung des zuvor beschriebenen Verfahrens geeigneter intermediärer Netzwerkknoten ist wie folgt ausgebildet. Zunächst verfügt ein solcher Netzwerkknoten über eine QKD-Infrastruktur, also über typische für die Schlüsselerzeugung und den Schlüsselaustausch unter Nutzung des QKD-Prinzips, beispielsweise für die Anwendung eines das BB84-Protokoll nutzenden Verfahrens, erforderlichen Komponenten beziehungsweise Mittel. Die betreffenden Mittel können hard- und/oder softwarebasiert sein. Demgemäß bezieht sich deren Unterscheidung voneinander und ihre jeweilige Benennung, auch im Zusammenhang mit dem später noch zu beschreibenden Ausführungsbeispiel, auf ihre Funktion im Zusammenhang mit der Nutzung des QKD-Prinzips, ohne dabei eine Aussage darüber zu treffen, inwieweit es sich um tatsächlich voneinander abgrenzbare oder aber auch gegebenenfalls in einer Einrichtung integral zusammengefasste Einheiten handelt.

Zu den entsprechenden Mitteln gehören insbesondere ein oder mehrere QKD-Server, ein Schlüssel-Management und ein Hardwaresicherheitsmodul (HSM). Bei einem QKD-Server handelt es sich nach diesem Verständnis um eine gegebenenfalls auch mittels verteilter Komponenten realisierte Einrichtung zur quantentechnischen Erzeugung und zur Verteilung kryptographischer Schlüssel, welche beispielsweise eine Photonenquelle, in jedem Fall aber Mittel zum Aufbau eines Quantenkanals zur Übertragung von Quantenzuständen umfasst. Mit Hilfe des Schlüsselmanagements werden die mittels des QKD-Servers erzeugten quantensicheren Schlüssel, vorzugsweise in Zuordnung zu einem einen jeweiligen Schlüssel eindeutig identifizierenden Identifikator, verwaltet.

Die Verwaltung der Schlüssel (und Identifikatoren, das heißt Identifiern) betrifft dabei deren Abspeicherung in dem schon genannten HSM sowie die Steuerung ihres jeweiligen Einsatzes, also den mittels eines Identifikators erfolgenden Abruf (das Auslesen) eines Schlüssels aus dem HSM zur Verwendung für das Verschlüsseln von Daten, anderen Schlüsseln oder für die Sicherung eines Übertragungskanals. Darüber hinaus ist der intermediäre Netzwerkknoten mit Mitteln zum Aufbau von Übertragungskanälen zu benachbarten Netzwerkknoten ausgestattet. Er verfügt insoweit über Mittel zum Aufbau mindestens je eines Quantenkanals zu einem innerhalb eines Übertragungspfades - bezogen auf die Übertragungsrichtung für einen Nutzschlüssel - vorhergehenden sowie mit einem nachfolgenden Netzwerkknoten. Zudem verfügt er über Mittel zum Aufbau klassischer Kanäle zu den vorgenannten Netzwerkknoten, also zu dem ihm auf dem Übertragungsweg vorhergehenden und dem ihm nachfolgenden Netzwerkknoten.

Unter klassischen Kanälen werden hierbei Kanäle verstanden, welche nicht als Quantenkanäle ausgebildet sind und daher nicht der Übertragung von Quantenzuständen, sondern der klassischen digitalen, über Funk oder über eine leitungsbasierte elektrische oder eine optische Verbindung erfolgenden Übertragung von Daten, einschließlich von Schlüsseln, dienen. Dennoch können entsprechende Kanäle als sichere Kanäle ausgebildet sein, wenn sie Mittel zur Verschlüsselung über sie zu übertragender Daten umfassen. Letzteres ist insbesondere im Zusammenhang mit der Quantum Key Distribution bei in QKD-Systemen neben den Quantenkanälen ebenfalls erforderlichen klassischen Kanälen für das Schlüsselmanagement der Fall. Diese für das Schlüsselmanagement genutzten Kanäle müssen durch Verschlüsselung sicherbar sein und über eine hinreichend hohe Bandbreite für dabei zu übertragende Daten verfügen. Dennoch handelt es sich bei ihnen um klassische Kanäle im vorgenannten Sinne, da sie nicht die Übertragung von Quantenzuständen ermöglichen, sondern der klassisch digitalen Datenübertragung dienen.

Erfindungsgemäß sind die QKD-Server mit den Mitteln zum Aufbau von Quantenkanälen zu den auf dem Übertragungsweg benachbarten Netzwerkknoten innerhalb des intermediären Netzwerkknotens in einem manipulationssicheren Gehäuse angeordnet. Darüber hinaus sind innerhalb dieses manipulationssicheren Gehäuses Mittel (ein Baustein, eine Einheit oder eine Einrichtung) zur Ausführung der gemäß dem Verfahren vorgesehenen Verknüpfungen, das heißt zur Bildung der bitweisen XOR-Verknüpfung aus der bei dem Netzwerkknoten eingehenden Bitfolge sowie für die ebenfalls durch bitweise XOR-Verknüpfung erfolgende Bildung der an den nachfolgenden Netzwerkknoten auszusendenden Bitfolge angeordnet.

Die anderen zur QKD-Infrastruktur gehörenden Komponenten, wie insbesondere das Schlüsselmanagement und das HSM, können außerhalb des manipulationssicheren Gehäuses angeordnet sein. Entsprechend dem erfindungsgemäßen Verfahren ist es dabei sichergestellt, dass in diesen anderen Komponenten stets nur die entsprechenden, innerhalb des manipulationssicheren Gehäuses durch bitweise XOR-Verknüpfung gebildeten Bitfolgen vorliegen, nicht aber ein mit Hilfe der jeweiligen, durch bitweise XOR-Verknüpfung gebildeten Bitfolge übertragener Nutzschlüssel. Zudem ist der intermediäre Netzwerkknoten so ausgebildet, dass durch die entsprechenden, innerhalb des manipulationssicheren Gehäuses angeordneten Mittel zur bitweisen XOR-Verknüpfung die jeweils für die bitweise XOR-Verknüpfung verwendeten quantensicheren Schlüssel nach der Verknüpfungsoperation unmittelbar gelöscht werden.

Anhand von Zeichnungen sollen nachfolgend nochmals Aspekte der Erfindung auch unter Angabe eines Ausführungsbeispiels erläutert werden. Die Zeichnungen zeigen im Einzelnen:
- Fig. 1:: ein mögliches System aus Netzwerkknoten zur Ausführung des erfindungsgemäßen Verfahrens mit zwei dafür ausgebildeten intermediären Netzwerkknoten,
- Fig. 2:: eine mögliche Ausbildungsform für einen erfindungsgemäßen intermediären Netzwerkknoten,
- Fig. 3:: ein System von Netzwerkknoten unter Einbeziehung eines intermediären Netzwerkknotens nach dem Stand der Technik.

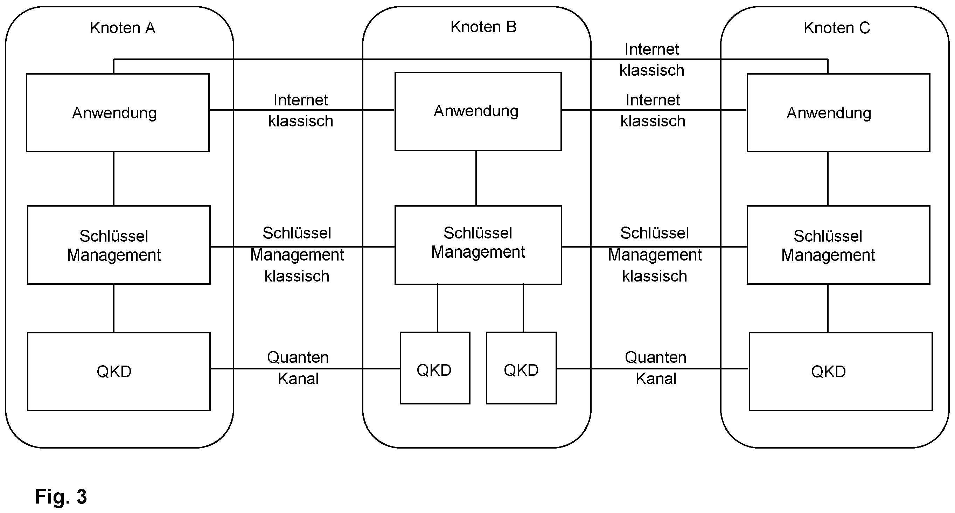

Zunächst soll das in der Fig. 3 dargestellte System aus Netzwerkknoten nach dem Stand der Technik erläutert werden. Das System umfasst zwei Netzwercknoten (Knoten A und C), welche Daten direkt untereinander unter Verwendung eines quantensicheren kryptographischen Schlüssels sicher austauschen wollen. Bei diesen beiden Netzwerkknoten handelt es sich um Netzwerkknoten, die zwar mit einer QKD-Infrastruktur ausgestattet, aber direkt untereinander nicht über einen Quantenkanal verbunden sind. Das heißt, diese beiden Netzwerkknoten können für einen sicheren Datenaustausch zu verwendende quantensichere Schlüssel direkt untereinander nicht nach dem QKD-Prinzip austauschen.

Für das Fehlen eines die beiden Netzwerkknoten direkt miteinander verbindenden Quantenkanals beziehungsweise für die eventuell bestehende Unmöglichkeit, einen solchen direkten Quantenkanal zwischen den beiden Netzwerkknoten zu realisieren, kann es unterschiedliche Gründe geben. Vorliegend sei angenommen, dass es sich bei den Netzwerkknoten um Netzwerkelemente handelt, welche deutlich mehr als 100 km, also etwa mehrere 100 km oder über 1.000 km voneinander entfernt sind, so dass eine oder mehrere, die Netzwerkknoten miteinander verbindende Glasfaserstrecken nicht zur Realisierung eines für die Nutzung des QKD-Prinzips erforderlichen Quantenkanals genutzt werden können. Deshalb tauschen die beiden Netzwerkknoten einen von ihnen für eine sichere Datenübertragung gemeinsam zu nutzenden quantensicheren kryptographischen Schlüssel über einen zwischen ihnen angeordneten intermediären Netzwerkknoten aus. Hierbei kann sich folgender Ablauf vollziehen, wobei die einzelnen Netzwerkknoten in der nachfolgenden tabellarischen Übersicht vereinfachend als "Knoten" bezeichnet wurden und es sich bei der Zufallszahl Z um den erfindungsgemäß übertragenen Nutzschlüssel handelt:

| Prozessschritt | Beschreibung |
|---|---|
| Erzeugung einer Zufallszahl in Knoten A durch das Schlüsselmanagement. | Zufallszahl Z = Nutzschlüssel |
| Bitweise XOR-Verknüpfung der Zufallszahl Z mit einem quantensicheren Schlüssel S_{AB}. Versendung an Knoten B über einen klassischen Schlüsselmanagementkanal. | Versende Z ⊕ S_{AB} |
| Knoten B entschlüsselt die Zufallszahl mit demselben Schlüssel S_{AB}, so dass die Zufallszahl Z hier unverschlüsselt vorliegt. Z wird mit einem quantensicheren Schlüssel S_{BC} für den nächsten Abschnitt der Verbindung verschlüsselt In Knoten B müssen die quantensicheren Schlüssel S_{AB}, und S_{BC} vorliegen. Deshalb muss der Netzknoten B ein "Trusted Node" sein. | Berechne |
| | Z ⊕ S_{AB} ⊕ S_{AB} = Z und versende Z ⊕ S_{BC} |
| Knoten C entschlüsselt die Zufallszahl Z mit demselben Schlüssel S_{BC}. Es liegt nun an den Endknoten A und C dieselbe Zufallszahl Z vor, die nun als quantensicherer Schlüssel für die Verschlüsselung der direkten Verbindung von Knoten A zum Knoten C, oder auch auf der Applikationsebene verwendet werden kann. | Berechne |
| | Z ⊕ S_{BC} ⊕ S_{BC} = Z und verwende Z als quantensicheren Schlüssel. |
| | ⊕ bezeichnet die mathematische (hier stets bitweise) XOR Verknüpfung. |

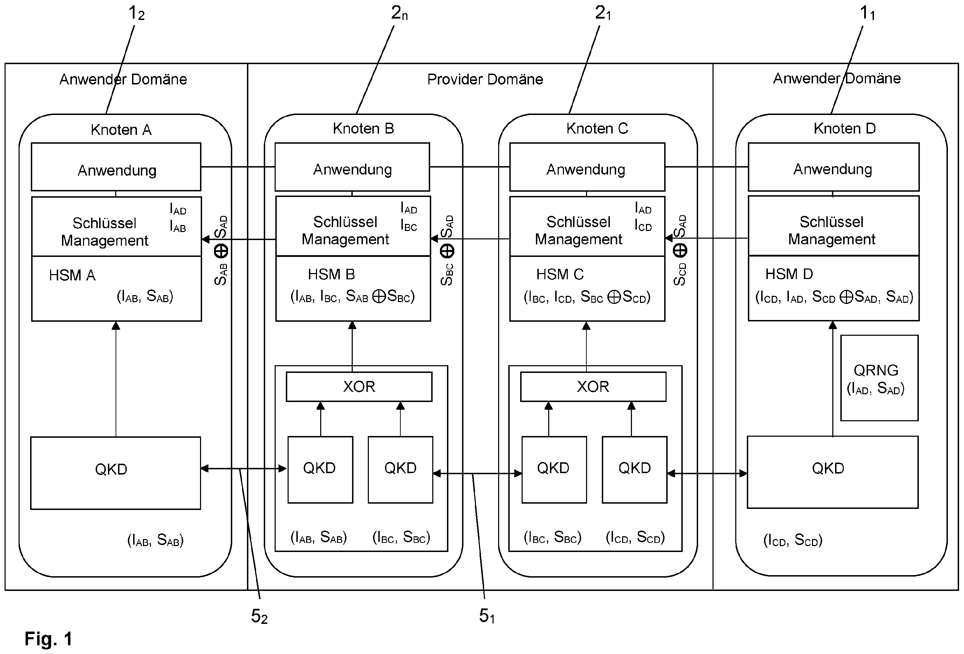

In dem vorstehenden Ablauf bezeichnet, ebenso wie in den später noch anhand der Fig. 1 zu erläuternden erfindungsgemäßen Ablauf das Symbol "⊕" stets eine Operation zur bitweisen XOR-Verknüpfung.

Ein wesentlicher Nachteil des zuvor beschriebenen Systems und des zur Bereitstellung eines von den Netzwerkknoten A und C gemeinsam zu verwendenden kryptographischen Schlüssels genutzten Verfahrens ist es, dass ein solcher quantensicherer Schlüssel, der durch den Netzwerkknoten C erzeugt und über den intermediären Netzwerkknoten an den Netzwerkknoten A übertragen wird, auch in dem intermediären Netzwerkknoten vorliegt.

Daher muss allerdings der intermediäre Netzwerkknoten als ein sogenannter Trusted Node ausgebildet sein, also in besonderer Weise umfänglich gesichert werden. Die dazu erforderlichen Maßnahmen, wie eine Überwachung sämtlicher Einrichtungen des Netzwerkknotens, eine Anordnung dieser Einrichtungen in speziell, alarmgesicherten Räumlichkeiten und dergleichen mehr, ist jedoch sehr aufwendig.

Entsprechend einem möglichen Anwendungsszenario kann es sich beispielsweise bei den Netzwerkknoten A und C um durch ein Unternehmen einerseits in einer Unternehmenszentrale und andererseits in einer Außenstelle betriebene Netzeinrichtungen handeln, vermittels welcher zwischen den Unternehmensteilen hoch sicherheitsrelevante Daten ausgetauscht werden. Die Netzwerkknoten A und C werden demnach innerhalb einer Anwender-Domäne, nämlich in der Zentrale und der Außenstelle einer Firma, betrieben. Bei dem intermediären Netzwerkknoten handelt es sich hingegen typischerweise um Übertragungseinrichtungen eines Netzwerkbetreibers. Das heißt, der intermediäre Knoten wird in einer anderen Domäne, nämlich in einer Provider-Domäne, betrieben. Im Bereich der Provider-Domäne ist dabei der Netzwerkbetreiber dafür verantwortlich, dass über den intermediären Knoten zwischen den Netzwerkknoten A und C übertragene quantensichere Schlüssel hier nicht illegalerweise in die Hände potenzieller Angreifer gelangen können. Demgemäß muss der Netzwerkbetreiber die erforderlichen Maßnahmen treffen, aufgrund welcher der intermediäre Netzwerkknoten als Trusted Node gelten kann.

In der Fig. 1 ist ein System aus Netzwerkknoten 1₁, 1₂, 2₁, 2ₙ mit zwei erfindungsgemäß ausgebildeten intermediären Netzwerkknoten 2₁, 2ₙ dargestellt, wobei alle Netzwerkknoten 1₁, 1₂, 2₁, 2ₙ des Systems, das heißt sowohl die ersten Netzwerkknoten 1₁, 1₂, für welche quantensichere Nutzschlüssel unter Verwendung der Erfindung bereitgestellt werden, als auch die intermediären Netzwerkknoten 21, 2n zur Vereinfachung der nachfolgenden Darstellungen zusätzlich mit alphabetischen Bezeichnern versehen und aus Platzgründen in der Zeichnung verkürzend als "Knoten" bezeichnet wurden. Die Begriffe "Netzwerkknoten" und "Knoten" werden demnach, so auch in den nachfolgenden Erläuterungen, synonym verwendet.

Innerhalb des in der Fig. 1 gezeigten Systems werden der Netzwerkknoten A und der Netzwerkknoten D in einer Anwender-Domäne betrieben, wohingegen die beiden intermediären Netzwerkknoten 2₁, 2ₙ innerhalb der Provider-Domäne angeordnet sind. Auch bei dem in der Fig. 1 dargestellten System sind die beiden Netzwerkknoten 1₁, 1₂, in der Anwender-Domäne als QKD-fähige Netzwerkknoten 1₁, 1₂, also als mit einer QKD-Infrastruktur ausgestattete Netzwerkknotenli, 1₂, ausgebildet, aber untereinander (beispielsweise aufgrund entsprechender Entfernung voneinander) nicht direkt durch einen Quantenkanal miteinander verbunden. Dennoch besteht seitens des Anwenders beziehungsweise von ihm genutzter Applikationen ein Bedarf für einen durch die Verwendung quantensicherer kryptographischer Schlüssel gesicherten Datenaustausch zwischen den Netzwerkknoten A und D. Unter der Annahme, dass zumindest ein erster, später gegebenenfalls der Übertragung weiterer quantensicherer Schlüssel durch verschlüsselte Übertragung über einen klassischen Datenkanal dienender Nutzschlüssel in dem Netzwerkknoten D mittels eines QRNG (Quantum Random Number Generator) erzeugt und über die intermediären Netzwerkknoten 21, 2n an den anderen ersten Netzwerkknoten 1₂, (Netzwerkknoten A) in der Anwender-Domäne übertragen wird, vollzieht sich entsprechend dem erfindungsgemäßen Verfahren folgender Ablauf:
1. Das Schlüsselmanagement des Netzwerkknotens A fordert einen quantensicheren Schlüssel vom Schlüsselmanagement des Netzwerkknotens D an. Die notwendige Kommunikation erfolgt über den klassischen Kanal, der die Schlüsselmanagementsysteme miteinander verbindet.
2. Das Schlüsselmanagement von Knoten D wählt einen zufälligen Schlüssel S_{AD} (Zufallszahl Z = Nutzschlüssel) und Identifier I_{AD} aus seinem Schlüsselvorrat, der im HSM (Hardware Security Module) des Schlüsselmanagements gespeichert wird, aus. Die Schlüssel und Identifier (S_{AD} und I_{AD}) werden kontinuierlich über einen QRNG (Quantum Random Number Generator) erzeugt. Der QKD Server des Knotens D liefert ebenfalls kontinuierlich mit dem Nachbarknoten C sicher ausgetauschte Schlüssel S_{CD} inklusive Identifier I_{CD} an das HSM.
3. Das Schlüsselmanagement von Knoten D berechnet nun eine bitweise XOR Verknüpfung von S_{AD} mit einem beliebigen über die QKD Strecke erzeugten Schlüssel S_{CD}, also S_{AD}⊕S_{CD}. Es übergibt sodann die erzeugte Verknüpfung S_{AD}⊕S_{CD}, die Identifier I_{AD}, und I_{CD} sowie die verbleibende Route, also den verbleibenden Teil des Übertragungspfades >B>A>End, aus dem der Netzwerkknoten A als der für den Empfang bestimmte erste Netzwerkknoten erkennbar ist, an das Schlüsselmanagement von Netzwerkknoten C über einen konventionellen (klassischen) Kanal. Das Schlüsselmanagement D speichert den Schlüssel S_{AD} sicher in einem HSM (Hardware Security Module), da dieser zur Verschlüsselung der Nutzdaten verwendet werden wird. Die bitweise verknüpften Schlüssel S_{AD}⊕S_{CD} bzw. deren Identifier oder die verbleibende Route, die über einen konventionellen Kanal verteilt wird, erlauben keine Rückschlüsse auf den finalen Schlüssel S_{AD}.
4. Das Schlüsselmanagement von Knoten C wählt aufgrund des übermittelten Identifier I_{CD} und der übermittelten Restroute B>A>End, einen beliebigen Schlüssel S_{CD}⊕S_{BC} nebst Identifier I_{BC} aus seinem HSM (Hardware Security Module) für die weitere Verarbeitung aus. Anschließend werden die bitweise XOR verknüpften Schlüssel S_{CD}⊕S_{BC} mit den vom Knoten D übertragenen Daten S_{AD}⊕S_{CD} bitweise XOR verknüpft.
   Die sich ergebene bitweise XOR Verknüpfung S_{CD}⊕S_{BC}⊕S_{AD}⊕S_{CD} = S_{AD}⊕S_{BC} wird zusammen mit den Identifiern I_{AD} und I_{BC} und der Restroute >A>End zum Knoten B über einen konventionellen (klassischen) Kanal übertragen.

Im Knoten C befinden sich in der "Provider Domäne" außerhalb des sicheren QKD Servers keine Informationen über einzelne QKD Schlüssel, sondern nur über bitweise XOR verknüpfte Konstrukte, z.B. S_{CD}⊕S_{BC}, die keine Rückschlüsse auf direkt verwendete quantensichere Schlüssel zulassen.

Innerhalb des sicheren Gehäuses 3 mit den QKD Servern des Knotens C werden die Schlüssel S_{CD} und S_{BC} einer bitweisen XOR Verknüpfung S_{CD}⊕S_{BC} unterzogen, bevor sie in das HSM 6 des Schlüsselmanagements C "exportiert" werden - nach dem Export werden die QKD Schlüssel sofort gelöscht. Damit ist der anwenderbezogene direkte Schlüssel S_{AD} (der letztendlich für die Verschlüsselung der Nutzdaten verwendet werden soll) weder innerhalb noch außerhalb des manipulationssicheren Gehäuses 3 offengelegt.
5. Das Schlüsselmanagement von Knoten B wählt, aufgrund des übermittelten Identifier I_{BC} und der übermittelten Restroute A>End, einen beliebigen Schlüssel S_{BC}⊕S_{AB} nebst Identifier I_{AB} aus seinem HSM (Hardware Security Module) für die weitere Verarbeitung aus. Anschließend werden die bitweise XOR verknüpften Schlüssel S_{BC}⊕S_{AB} mit den vom Knoten C übertragenen Daten S_{AD}⊕S_{BC} bitweise XOR verknüpft.
   Die sich ergebene bitweise XOR Verknüpfung S_{BC}⊕S_{AB}⊕S_{AD}⊕S_{BC} = S_{AD}⊕S_{AB} wird zusammen mit den Identifiern I_{AD} und I_{AB} und die Restroute >End zum Knoten A über einen konventionellen Kanal übertragen. Damit ist der anwenderbezogene direkte Schlüssel S_{AD} weder innerhalb noch außerhalb des sicheren QKD Bereichs Gehäuse 3 mit QKD Servern und Mitteln 8 zur bitweisen XOR-Verknüpfung) offengelegt.
   Die Schlüssel S_{BC} und S_{AB} sowie ihre Identifier I_{BC} und I_{AB} werden im gesicherten QKD Bereich des Knotens B gelöscht.
   Im Knoten B befinden sich weder innerhalb noch außerhalb des sicheren QKD Bereichs keine Informationen über direkte anwenderbezogene Schlüssel, sondern nur über bitweise XOR verknüpfte Konstrukte, z.B. S_{AD}⊕S_{BC} und S_{BC}⊕S_{AB} bzw. abhängig davon S_{AD}⊕S_{AB} die keine Rückschlüsse auf direkt verwendete quantensichere Schlüssel zulassen. Auch die Kenntnis der Kommunikation von D zu C, i.e. S_{AD}⊕S_{CD}, ermöglich keine Offenlegung von S_{AD} in Knoten B.
6. Das Schlüsselmanagement von Knoten A wählt aufgrund des übermittelten Identifier I_{AB}, den Schlüssel S_{AB} und aufgrund der übermittelten Restroute >End keinen weiteren Schlüssel für die weitere Verarbeitung aus, da es sich als Endknoten erkannt hat.
   Der Schlüssel S_{AB} wird im Schlüsselmanagement einer bitweisen XOR Verknüpfung mit den vom Knoten B übertragenen Daten S_{AD}⊕S_{AB} unterzogen.
   Die sich ergebende bitweise XOR-Verknüpfung S_{AB}⊕S_{AB}⊕S_{AD} = S_{AD} liefert den für die Übertragung von Knoten A nach Knoten D gültigen quantensicheren Schlüssel S_{AD}, mit dem die Verbindung zwischen den Knoten A und D oder weitere Applikationen eines Anwenders gesichert werden können. Der dazugehörige Identifier I_{AD} wurde ebenfalls über die konventionelle Übertragung empfangen und kann nun für den Aufbau der quantensicheren Verbindung oder Applikation des Anwenders an den Knoten D gesendet werden.
   Die Schlüssel S_{AB} sowie ihre Identifier I_{AB} werden im Knoten A gelöscht.
   Im Knoten A befinden sich außerhalb des sicheren QKD Bereichs (manipulationssicheres Gehäuse 3 mit QKD Servern, das heißt mit Mitteln 4 zur Schlüsselerzeugung und zum Aufbau von Quantenkanälen 5₁, 5₂ und mit Mitteln 8 für die bitweise XOR-Verknüpfung) keine Informationen über einzelne Schlüssel, sondern nur über bitweise XOR verknüpfte Konstrukte, z.B. S_{AD}⊕S_{AB} die keine Rückschlüsse auf direkt verwendete quantensichere Schlüssel zulassen.
   Innerhalb des HSMs 6 des sicheren Schlüsselmanagements in der Anwenderdomäne ist der Schlüssel S_{AD} nun aber offengelegt, um die anwenderbezogene Ende-zu-Ende Verschlüsselung durchführen zu können.
7. Der Identifier I_{AD} wird über eine konventionelle Übertragung vom Knoten A an den Knoten D gesendet, um den Aufbau einer direkten quantensicheren Verbindung oder Applikation des Anwenders zu initiieren und eine quantensichere Verschlüsselung für Nutzdaten zur Verfügung zu stellen. Dazu wendet der Knoten D den zum empfangenen Identifier I_{AD} zugehörigen vorliegenden Schlüssel S_{AD} an.
8. Das in der Erfindung offenbarte Protokoll kann in einem QKD Netzwerk auf beliebige Verbindungen mit beliebig vielen intermediären Knoten angewendet werden, um direkte quantensichere Verbindungen oder Applikationen von Anwendern zwischen den jeweiligen Endknoten aufzubauen.
9. Voraussetzung für die Übertragung von bitweise XOR verknüpften Schlüsseln und Schlüssel-Identifiern ist eine gesicherte Authentifizierung der beteiligten Netzwerkknoten bzgl. des Schlüsselmanagements.

Die vorstehenden Ausführungen mit dem Hinweis auf die jeweils verbleibende route also auf den jeweils verbleibenden Teil des Übertragungskanals dürften es für den Fachmann nachvollziehbar erscheinen lassen, dass bei einem sich dann entsprechend etwas verändernden Ablauf selbstverständlich auch der Netzwerkknoten B, der andere für den Empfang bestimmte erste Netzwerkknoten sein könnte, wobei er dann weder als intermediärer Netzwerkknoten mit zwei QKD-Servern noch in erfindungsgemäßer Weise mit einem manipulationssicheren Gehäuse 3 ausgebildet sein müsste. Das heißt ein System, bei welchem zumindest ein erster Nutzschlüssel entsprechend dem erfindungsgemäßen Verfahren übertragen wird, kann, abweichend von dem in der Fig. 1 gezeigten, gegebenenfalls auch nur einen intermediären Netzwerkknoten 2₁ umfassen, wobei sich der zuvor dargestellte Ablauf dahingehend ändern würde, dass die erfindungsgemäß vorgesehene, in einem manipulationssicheren Gehäuse 3 eines intermediären Netzwerkknotens erfolgende zweifache bitweise XOR-Verknüpfung nur ein Mal, nämlich in dem dann einen intermediären Netzwerkknoten 2₁ ausgeführt werden würde.

Auch kann ein solches System insoweit eine nicht starre Konstellation aufweisen, als in einem Netzwerk angeordnete einzelne Netzwerkknoten 1₁, 1₂, 2₁, 2ₙ in einer (temporär bestehenden) Konstellation als erste Netzwerkknoten und in einer anderen (ebenfalls nur temporär bestehenden) Konstellation als intermediärer Netzwerkknoten fungieren, wobei selbstverständlich jeder Netzwerkknoten, welcher ausschließlich als oder auch (temporär) als intermediärer Netzwerkknoten fungieren können soll, dazu ausgebildet sein muss, mit zwei benachbarten Netzwerkknoten in eine QKD-Beziehung treten, also insbesondere zu diesen einen Quantenkanal 5₁, 5₂ aufbauen zu können und über in einem manipulationssicheren Gehäuse 3 angeordnete Mittel 8 zur bitweisen XOR-Verknüpfung verfügen muss. Schließlich sei an dieser Stelle auch nochmals erwähnt, dass, abweichend von den zur Fig. 1 und den sich vollziehenden Abläufen gemachten Ausführungen, ebenso der als erster Netzwerkknoten 1₁ fungierende Netzwerkknoten D von dem ebenfalls als erster Netzwerkknoten 1₂, fungierenden Netzwerkknoten A einen quantensicheren Nutzschlüssel anfordern könnte und sich dann die Übertragungsvorgänge zur Übertragung dieses Nutzschlüssels an den ersten Netzwerkknoten D in entsprechender Weise in der anderen Richtung vollziehen würden.

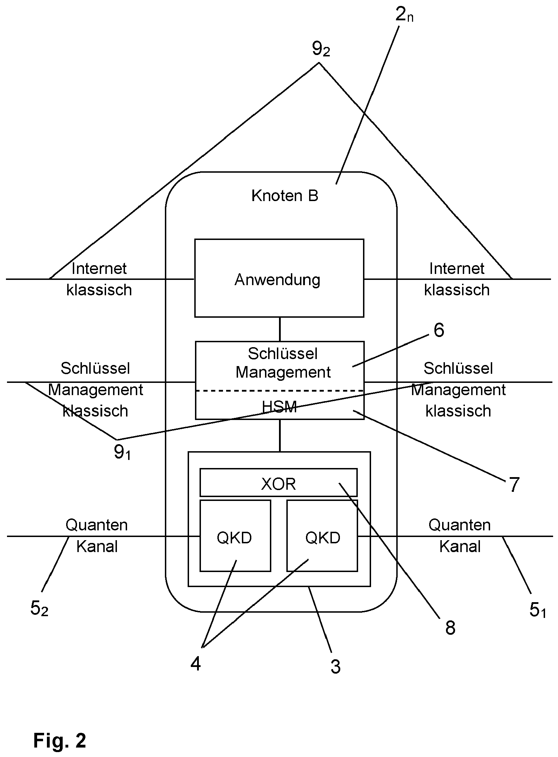

In der Fig. 2 ist nochmals eine mögliche Ausbildungsform eines erfindungsgemäßen, in dem System gemäß der Fig. 1 verwendeten intermediären Netzwerkknotens 2ₙ gezeigt. Bei dem in der Fig. 2 gezeigten intermediären Netzwerkknoten 2ₙ sind die Anwendungsschicht und die Schicht für das Schlüsselmanagement, also die Schichten für die sichere Datenübertragung zwischen den Netzwerkknoten 1₁, 1₂, der Anwender-Domäne einerseits und für die Übertragung eines Nutzschlüssels zwischen diesen beiden Netzwerkknoten1₁, 1₂, sowie zur Übertragung gemäß dem Verfahren verwendeter, nach dem QKD-Prinzip ausgetauschter Quantenschlüssel andererseits, deutlicher auseinandergezogen worden. Innerhalb beider Schichten besteht eine Verbindung mit benachbarten Knoten jeweils über zwei klassische, aber jedenfalls über Mittel zur Verschlüsselung verfügende Kanäle, wobei über den klassischen Kanal 9₂ der Anwendungsschicht übertragene (hier selbstverständlich auch mittels nach der Erfindung übertragener Nutzschlüssel verschlüsselbare) Nutzdaten Daten strikt von den über den klassischen Kanal 9₁ übertragenen Daten für das Schlüsselmanagement zu trennen sind.

Weiterer wesentlicher Bestandteil des intermediären Netzwerkknotens 2ₙ sind die mit QKD bezeichneten Mittel 4 zur Erzeugung der Quantenschlüssel, also beispielsweise zur Generierung einzelner für das QKD-Verfahren verwendeter Photonen und zum Austausch entsprechender Quantenzustände über einen Quantenkanal 5₁, 5₂. Die vorgenannten, mit QKD gekennzeichneten Mittel 4 sind zusammen mit Mitteln 8 zur Bildung der nach dem erfindungsgemäßen Verfahren vorgesehenen bitweisen XOR-Verknüpfungen in einem gemeinsamen manipulationssicheren Gehäuse 3 angeordnet.

## Patentansprüche

1. Verfahren zur Bereitstellung quantensicherer kryptographischer Schlüssel als Nutzschlüssel für einen sicheren Datenaustausch zwischen zwei ersten Netzwerkknoten (1₁, 1₂), welche mit Mitteln zur Erzeugung und zum Austausch von Quantenschlüsseln nach dem QKD-Prinzip, das heißt nach einem Verfahren der Quantum Key Distribution ausgestattet, aber direkt untereinander nicht über einen dafür erforderlichen Quantenkanal verbunden sind, so dass zumindest ein erster, in einem der beiden ersten Netzwerkknoten (1₁, 1₂) erzeugter quantensicherer Nutzschlüssel an den anderen ersten Netzwerkknoten (1₁, 1₂) übertragen wird über einen Übertragungspfad, umfassend die beiden ersten Netzwerkknoten (1₁, 1₂) und mindestens einen zweiten, zur Nutzung des QKD-Prinzips ausgebildeten intermediären Netzwerkknoten (2₁, 2₂, ..., 2ₙ), der bezogen auf die Übertragungsrichtung des Nutzschlüssels innerhalb des Übertragungspfades mit einem ihm vorhergehenden sowie mit einem ihm nachfolgenden Netzwerkknoten über je einen Quantenkanal verbunden ist, **dadurch gekennzeichnet, dass** der Nutzschlüssel durch den oder die intermediären Netzwerkknoten (2₁, 2₂, ..., 2ₙ) übertragen wird mittels einer Bitfolge, die in dem jeweiligen intermediären Netzwerknoten (2₁, 2₂, ..., 2ₙ) innerhalb eines Mittel (8) zur Bildung der Bitfolge sowie Mittel (4) zur Schlüsselerzeugung und zum Aufbau der Quantenkanäle zu den benachbarten Netzwerkknoten aufnehmenden manipulationssicheren Gehäuses (3) jeweils gebildet wird, indem eine von dem in der Übertragungsrichtung vorhergehenden Netzwerknoten empfangene Bitfolge, welche durch eine bitweise XOR-Verknüpfung des Nutzschlüssels mit einem, aufgrund Austausches nach dem QKD-Prinzip, mit dem vorhergehenden Netzwerkknoten gemeinsamen quantensicheren Schlüssel gebildet ist, abermals mit dem mit dem vorhergehenden Netzwerkknoten gemeinsamen quantensicheren Schlüssel sowie außerdem mit einem, aufgrund Austausches nach dem QKD-Prinzip, mit dem in der Übertragungsrichtung nachfolgenden Netzwerkknoten gemeinsamen quantensicheren Schlüssel bitweise XOR verknüpft wird, wobei außerhalb des manipulationssicheren Gehäuses (3) lediglich die jeweiligen mit dem Nutzschlüssel gebildeten XOR-Verknüpfungen vorliegen, nicht aber der übertragene Nutzschlüssel selbst.

2. Verfahren nach Anspruch 1, **dadurch gekennzeichnet, dass** ein erster zwischen den beiden ersten Netzwerkknoten (1₁, 1₂) übertragener Nutzschlüssel verwendet wird, um weitere in einem der beiden ersten Netzwerkknoten (1₁, 1₂) quantentechnisch erzeugte Nutzschlüssel zu verschlüsseln und über einen klassischen Kanal an den anderen ersten Netzwerkknoten zu übertragen.

3. Verfahren nach Anspruch 1 oder 2, **dadurch gekennzeichnet, dass** der oder die Nutzschlüssel durch einen der beiden ersten Netzwerkknoten (1₁, 1₂) mittels eines Quantenzufallszahlengenerators erzeugt werden.

4. Verfahren nach einem der Ansprüche 1 bis 3, **dadurch gekennzeichnet, dass** der mindestes eine Nutzschlüssel über den Übertragungspfad übertragen wird, indem
- der den Nutzschlüssel erzeugende erste Netzwerkknoten (1₁, 1₂) an den ihm in der Übertragungsrichtung nachfolgenden intermediären Netzwerkknoten (2₁) eine Bitfolge aussendet, die er bildet durch bitweise XOR-Verknüpfung des Nutzschlüssels mit einem aufgrund Austausches nach dem QKD-Prinzip sowohl bei dem ersten Netzwerkknoten (1₁, 1₂) als auch bei dem ihm nachfolgenden intermediären Netzwerkknoten (2₁) vorliegenden quantensicheren Schlüssel; und indem
- ein jeweiliger intermediärer Netzwerkknoten (2₁, 2₂, ..., 2ₙ) an den ihm in der Übertragungsrichtung nachfolgenden Netzwerkknoten eine Bitfolge aussendet, die er in dem manipulationssicheren Gehäuse bildet durch bitweise XOR-Verknüpfung der durch ihn von dem in der Übertragungsrichtung vorhergehenden Netzwerkknoten empfangenen Bitfolge mit einem, aufgrund Austausches nach dem QKD-Prinzip, mit diesem Netzwerkknoten gemeinsamen quantensicheren Schlüssel sowie mit einem, aufgrund Austausches nach dem QKD-Prinzip, mit dem in der Übertragungsrichtung nachfolgenden Netzwercknoten gemeinsamen quantensicheren Schlüssel; und indem
- der Nutzschlüssel in dem für seinen Empfang vorgesehenen ersten Netzwerkknoten (1₁, 1₂) aus der von dem in der Empfangsrichtung vorhergehenden intermediären Netzwerkknoten (2ₙ) empfangenen Bitfolge extrahiert wird durch bitweise XOR-Verknüpfung der empfangenen Bitfolge mit dem zu ihrer Bildung verwendeten und aufgrund Austausches nach dem QKD-Prinzip, mit dem in der Übertragungsrichtung vorhergehenden Netzwerkknoten (2ₙ) gemeinsamen quantensicheren Schlüssel.

5. Verfahren nach Anspruch 1 oder 4, **dadurch gekennzeichnet, dass** ein erster, von den beiden ersten Netzwerkknoten (1₁, 1₂) gemeinsam zu nutzender, durch einen dieser beiden Netzwerknoten (1₁, 1₂) erzeugter quantensicherer Nutzschlüssel an den anderen ersten Netzwerkknoten (1₁, 1₂) aufgrund einer über einen klassischen Übertragungskanal erfolgenden Anforderung des anderen ersten Netzwerkknotens (1₁, 1₂) übertragen wird, gemäß den folgenden Verfahrensschritten :
a.) Auswählen eines beliebigen aus einer Mehrzahl erzeugter Nutzschlüssel aufgrund der erfolgten Anforderung eines Nutzschlüssels und bitweises XOR-Verknüpfen dieses Nutzschlüssels durch den ihn auswählenden ersten Netzwercknoten (1₁, 1₂) mit einem beliebigen quantensicheren Schlüssel, über den durch Austausch nach dem QKD-Prinzip sowohl der erste, den Nutzschlüssel erzeugende Netzwerkknoten (1₁, 1₂) als auch der ihm in der Übertragungsrichtung nachfolgende intermediäre Netzwerkknoten (2₁) gemeinsam verfügen,
b.) Übertragen der durch die XOR-Verknüpfung gebildeten Bitfolge, der Identifier der beiden zur Bildung der XOR-Verknüpfung verwendeten quantensicheren Schlüssel und einer eine Information über den für den Empfang des Nutzschlüssels bestimmten Netzwerkknoten enthaltenden Angabe zum verbleibenden Teil des Übertragungspfades von dem den Nutzschlüssel erzeugenden ersten Netzwerkknoten (1₁, 1₂) an den ihm in der Übertragungsrichtung nachfolgenden intermediären Netzwerkknoten (2₁),
c.) Empfangen der von dem in der Übertragungsrichtung vorhergehenden Netzwerkknoten übertragenen Bitfolge, der Identifier sowie der Angabe zum verbleibenden Teil des Übertragungspfades durch den intermediären Netzwerkknoten (2₁, 2₂, ..., 2ₙ) und Bildung einer neuen Bitfolge durch bitweise XOR-Verknüpfung der empfangenen Bitfolge mit einem, aufgrund Austausches nach dem QKD-Prinzip, mit dem vorhergehenden Netzwerkknoten gemeinsamen quantensicheren Schlüssel sowie mit einem beliebigen quantensicheren Schlüssel, über den durch Austausch nach dem QKD-Prinzip der diese Bitfolge bildende Netzwerkknoten als auch der ihm in der Übertragungsrichtung nachfolgende Netzwerkknoten gemeinsam verfügen,
d.) Übertragen der gebildeten neuen Bitfolge, der Identifier des Nutzschlüssels und des zur Bildung der neuen Bitfolge verwendeten quantensicheren Schlüssels sowie einer eine Information über den für den Empfang des Nutzschlüssels bestimmten Netzwerkknoten (1₁, 1₂) enthaltenden Angabe zum verbleibenden Teil des Übertragungspfades von dem die neue Bitfolge erzeugenden intermediären Netzwerkknoten (2₁, 2₂, ..., 2ₙ) an den in der Übertragungsrichtung nachfolgenden Netzwerkknoten,
e.) Empfangen der von dem in der Übertragungsrichtung vorhergehenden intermediären Netzwerkknoten (2ₙ) übertragenen Bitfolge, der Identifier sowie der Angabe zum verbleibenden Teil des Übertragungspfades und, sofern der die Bitfolge empfangende Netzwerkknoten gemäß der Angabe zum verbleibenden Teil des Übertragungspfades der letzte Netzwerkknoten auf dem Übertragungspfad und damit der für den Empfang des Nutzschlüssels bestimmte erste Netzwercknoten (1₁, 1₂) ist, bitweise XOR-Verknüpfung dieser Bitfolge mit dem zu deren Bildung durch den in der Übertragungsrichtung vorhergehenden intermediären Netzwerkknoten (2ₙ) verwendeten, durch den ebenfalls empfangenen zugehörigen Identifikator eindeutig bestimmten quantensicheren Schlüssel, über den, aufgrund Austausches nach dem QKD-Prinzip, sowohl der empfangende erste Netzwerkknoten (1₁, 1₂) als auch der in der Übertragungsrichtung vorhergehende intermediäre Netzwerkknoten (2ₙ) gemeinsam verfügen,
wobei die Verfahrensschritte c.) und d.) wiederholt werden, bis ein die gemäß Verfahrensschritt d) übertragene Bittfolge empfangender Netzwerkknoten durch Auswertung der mit ihr zusammen empfangenen Angabe zum verbleibenden Teil des Übertragungspfades feststellt, dass er der letzte Netzwerkknoten des Übertragungspfades und damit der für den Empfang des Nutzschlüssels bestimmte erste Netzwerkknoten (1₁, 1₂) ist und er daher den Verfahrensschritt e) ausführt.

6. Netzwerkknoten mit einer QKD-Infrastruktur, nämlich Netzwerkknoten (2₁, 2₂, ..., 2ₙ)
- mit Mitteln (4) zur quantentechnischen Erzeugung kryptographischer Schlüssel und zum Aufbau je eines Quantenkanals (5₁, 5₂) mit zwei anderen Netzwerkknoten, das heißt eines Kanals zur Übertragung von Quantenzuständen für die Schlüsselverteilung nach dem QKD-Prinzip, und
- mit Mitteln zum Aufbau klassischer Kanäle (9₁, 9₂) mit den vorgenannten zwei anderen Netzwerkknoten und
- mit einem HSM (6), das heißt einem Hardwaresicherheitsmodul zur Speicherung erzeugter Schlüssel, und
- mit Mitteln (7) für das Schlüsselmanagement, das heißt Mitteln zur Verwaltung der quantensicheren Schlüssel in Zuordnung zu einem Identifier als einem die Schlüssel jeweils eindeutig identifizierenden Identifikator sowie zur Steuerung des Schlüsseleinsatzes,
**dadurch gekennzeichnet, dass** die Mittel (4) zur Schlüsselerzeugung und zum Aufbau der Quantenkanäle in einem manipulationssicheren Gehäuse (3) angeordnet sind, und zwar gemeinsam mit Mitteln (8), welche ausgebildet sind zur bitweisen XOR-Verknüpfung einer bei dem Netzwerkknoten (2₁, 2₂, ..., 2ₙ) eingehenden Bitfolge mit einem, aufgrund Austausches nach dem QKD-Prinzip, mit dem die eingehende Bitfolge aussendenden Netzwerkknoten gemeinsamen quantensicheren Schlüssel sowie zur bitweisen XOR-Verknüpfung der dabei entstehenden Bitfolge mit einem, aufgrund Austausches nach dem QKD-Prinzip, mit dem für den Empfang der hierdurch schließlich entstehenden sowie durch den verknüpfenden Netzwerkknoten (2₁, 2₂, ..., 2ₙ) auszusendenden Bitfolge bestimmten Netzwerkknoten gemeinsamen quantensicheren Schlüssel, wobei die Mittel (8) außerdem dazu ausgebildet sind, die zur Bildung der jeweiligen bitweisen XOR-Verknüpfung verwendeten quantensicheren Schlüssel unmittelbar nach der Bildung dieser Verknüpfung zu löschen.

7. Netzwerkknoten (2₁, 2₂, ..., 2ₙ) nach Anspruch 6, **dadurch gekennzeichnet, dass** die Mittel (4) zur quantentechnischen Erzeugung kryptographischer Schlüssel mindestens eine Photonenquelle umfassen.
